# EUROPEAN PATENT SPECIFICATION

(11) **EP 3 115 575 B1**
(45) Date of publication and mention of the grant of the patent: **19.06.2019**
(21) Application number: 15176233.3
(22) Date of filing: 10.07.2015
(51) Int. Cl.: F02C 7/045, F02C 7/24

(54) **SYSTEM FOR REDUCING NOISE GENERATED BY A TURBOMACHINERY**
SYSTEM ZUR REDUZIERUNG DES VON EINER TURBOMASCHINE ERZEUGTEN LÄRMS
SYSTÈME POUR RÉDUIRE LE BRUIT GÉNÉRÉ PAR UNE TURBOMACHINE

(43) Date of publication of application: 11.01.2017
(73) Proprietor: Siemens Aktiengesellschaft, 80333 München (DE)
(72) Inventor: Bachhor, Vikas Kumar, 122001 Gurgaon (IN)
(74) Representative: Patentanwaltskanzlei WILHELM & BECK

(56) References cited:
- GB-A- 1 449 186
- US-A- 5 491 308
- US-A1- 2003 072 648
- US-B2- 8 051 948

## Description

This invention relates to a gas turbomachinery. The invention discloses placing one or more silencing units at specified regions in the turbomachinery to reduce the noise generated by the turbomachinery.

Generally, a turbomachinery when in operation produces broadband noise. There may be many sources of noise in a turbomachinery. One of the major sources of noise may be due to the fan/blower arrangement associated with the turbomachinery. The noise may be generated by all the variants of the turbomachinery which includes air-cooled turbomachinery and hydrogen cooled turbomachinery. The noise generated causes irritation to the field workers working in the vicinity of the turbomachinery. In some cases, the noise generated by the turbomachinery is in the range of 97-111 dB which is well above the recommended levels of noise, which is 85 dB, at 1 meter away from the source, i.e., the turbomachinery.

Currently, the noise reduction is performed by, for example, using an acoustical enclosure to contain the noise generated. This is mainly implemented for air cooled turbomachinery. The acoustical enclosure may reduce the noise but at the cost of increased maintenance cost and additional expenditure. However, for a hydrogen cooled turbomachinery there is no substantial noise reduction mechanism. Therefore, there is a need for reducing the noise generated by the turbomachinery in an efficient and cost effective manner.

A gas turbomachinery and a silencing unit for use in a gas turbomachinery comprising the features of the first parts of independent claims is known from GB 1 449 186 A. Further prior art is disclosed by US 5 491 308 A and US 8 051 948 B2. Accordingly, it is an object of the invention to disclose an improved gas turbomachinery.

The object is met by the independent claim. Preferred embodiments are disclosed in the subclaims.

A silencing unit for absorbing the noise generated by a turbomachinery is provided. The silencing unit comprises a first aperture, capable of receiving in a first volume of air and a second aperture, capable of releasing a second volume of air. The silencing unit further comprises an air flow duct connecting the first aperture and the second aperture. The silencing unit is disposable between an air supply unit and a blower associated with the turbomachinery.

In accordance with an embodiment, the silencing unit comprises one or more layers of acoustic absorbing material for attenuating the noise generated by the turbomachinery. The one or more layers of the acoustic absorbing material is arranged in concentric layers.

In another embodiment, the acoustic absorbing material used in the silencing unit has a high acoustic absorption co-efficient.

In yet another embodiment, the silencing unit is capable of attenuating acoustic components from a volume of air received by the silencing unit. The silencing unit may receive a volume of air from the air supply unit of the turbomachinery, where the volume of air has a high noise density. The acoustic absorbing material in the silencing unit attenuates the noise and releases the volume of air, which has substantially low noise density.

In a further embodiment, the acoustic absorbing material is selected from a group of glass wool, acoustic cotton and acoustic foam. Further, any material which has a high noise absorption coefficient may be chosen to function as the acoustic absorption coefficient.

In a variation of the invention, the air flow duct is at least one of a solid structure and a perforated structure. The perforated structure is suitable as the noise attenuation will be increased as the interaction between the volume of air and the acoustic absorbing material is increased.

In a variation of the invention, the first aperture, the second aperture and the air flow duct are fabricated from at least one of a metal, non-metal and a metallic alloy.

The object of invention is achieved by disclosing a gas turbomachinery, according to claim 1, comprising an air supply unit, having a first end and a second end, wherein the second end is capable of releasing a volume of air to the blower. The gas turbomachinery comprises a blower, having a first end and a second end, wherein the first end is capable of receiving the volume of air from the air supply unit. Further, the gas turbomachinery comprises one or more silencing units disposed between the air supply unit and the blower.

In an embodiment, the first aperture and the second aperture are connected by an air flow duct. The air flow duct may have a hollow structure which is designed based on the position in the gas turbomachinery where in the silencing unit is disposed.

In another embodiment, the silencing unit comprises one or more layers of an acoustic absorbing material. The acoustic absorbing material may be arranged in a concentric manner within the air flow duct.

In yet another embodiment, the air flow duct comprises at least one clearance between one or more layers of acoustic absorbing material. The clearances allow for increased interaction between the air with high noise density and the acoustic absorbing material thereby increasing the noise absorption.

In a further embodiment, the one or more silencing unit comprises a first aperture and a second aperture, wherein the first aperture is adapted to receive a first volume of air and the second aperture is adapted to release a second volume of air.

In an exemplary embodiment, the second aperture of the silencing unit is capable of releasing a second volume of air towards the blower, wherein the second volume of air has a substantially low noise density. The acoustic absorbing material within the silencing unit attenuates the noise components in the first volume of air.

In a further embodiment, the first volume of air is released from the second end of the air supply unit and where in the first volume of air has a substantially high noise density.

In yet another embodiment, the air supply unit is a cooling unit associated with the turbomachinery.

The above mentioned and other features of the invention will now be addressed with reference to the accompanying drawings of the present invention. The illustrated embodiments are intended to illustrated, but not limit the invention.

The present invention is further described hereinafter with reference to illustrated embodiments shown in the accompanying drawings, in which:
- FIG 1: illustrates a gas turbomachinery in accordance with prior art;
- FIG 2: illustrates a gas turbomachinery with silencing units, in accordance with an embodiment;
- FIG 3: illustrates a detailed view of the gas turbomachinery with silencing units, in accordance with an embodiment;
- FIG 4: illustrates an air cooled turbomachinery with silencing units, in accordance with an embodiment;
- FIG 5A: illustrates a front view of a silencing unit, in accordance with an embodiment;
- FIG 5B: illustrates an exemplary cross-sectional view of a silencing unit, in accordance with an embodiment;
- FIG 6A: illustrates a front view of a variant of silencing unit, in accordance with an embodiment; and
- FIG 6B: illustrates a cross sectional view of the variant of the silencing unit, in accordance with an embodiment.

Various embodiments are described with reference to the drawings, wherein like reference numerals are used to refer like elements throughout. In the following description, for the purpose of explanation, numerous specific details are set forth in order to provide thorough understanding of one or more embodiments. It may be evident that such embodiments may be practiced without these specific details.

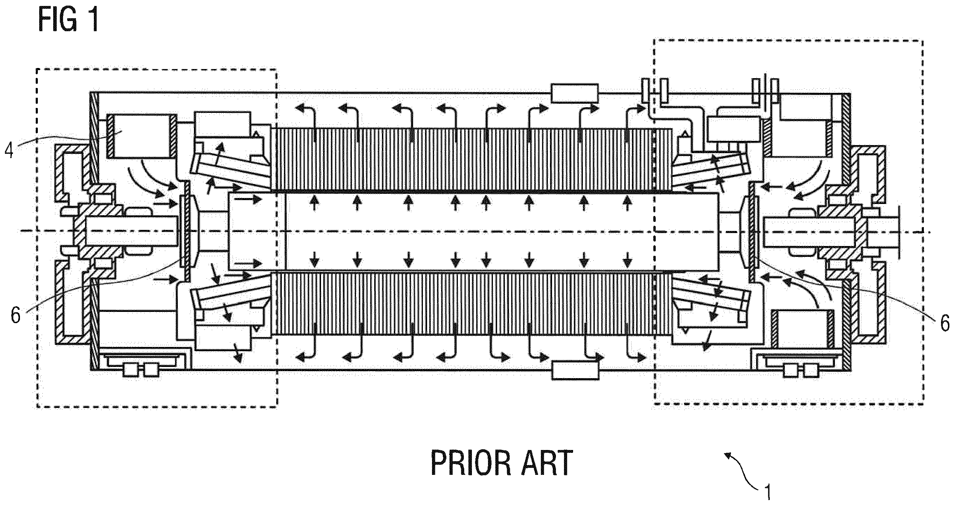

FIG 1 illustrates a gas turbomachinery 1 in accordance with prior art. The turbomachinery in the prior art generates a lot of noise which can be hazardous to the field workers working in the vicinity of the gas turbine. One of the major sources of noise is in the region between air supply unit 4 and blower 6. The air supply unit 4 has a first end and a second end, wherein the second end is capable of releasing a volume of air to the blower 6. The blower 6 has a first end and a second end, wherein the first end is capable of receiving the volume of air from the air supply unit. The blower 6 may also be coupled to the rotor of the turbomachinery. Further, the gas turbomachinery comprises one or more silencing units disposable between the air supply unit 4 and the blower 6. There is a need to suppress this noise generated in an efficient and cost effective manner.

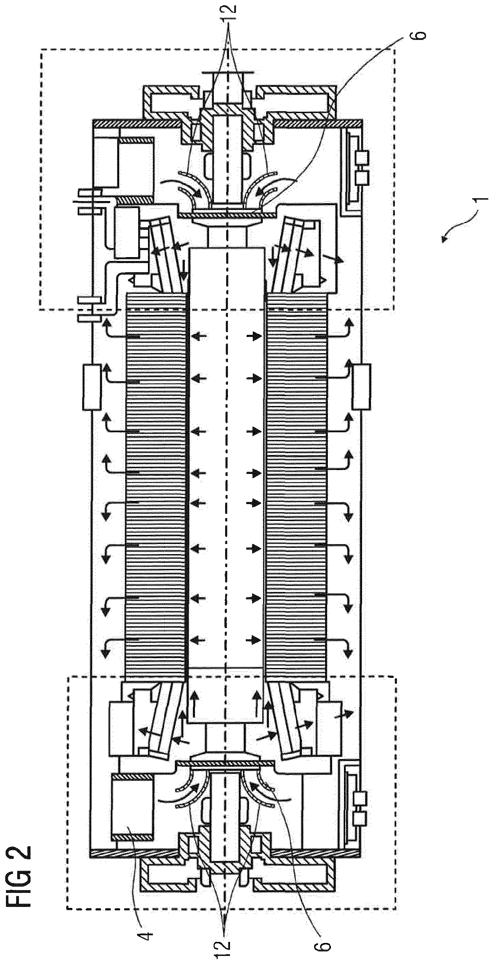

FIG 2 illustrates a gas turbomachinery with silencing units 12, in accordance with an embodiment. The silencing units 12 are placed between the air supply unit 4 and blower 6 so that the noise is absorbed by the silencing unit 12. The silencing unit 12 is capable of releasing a second volume of air towards the blower, wherein the second volume of air has a substantially low noise density. The acoustic absorbing material within the silencing unit attenuates the noise components in the first volume of air

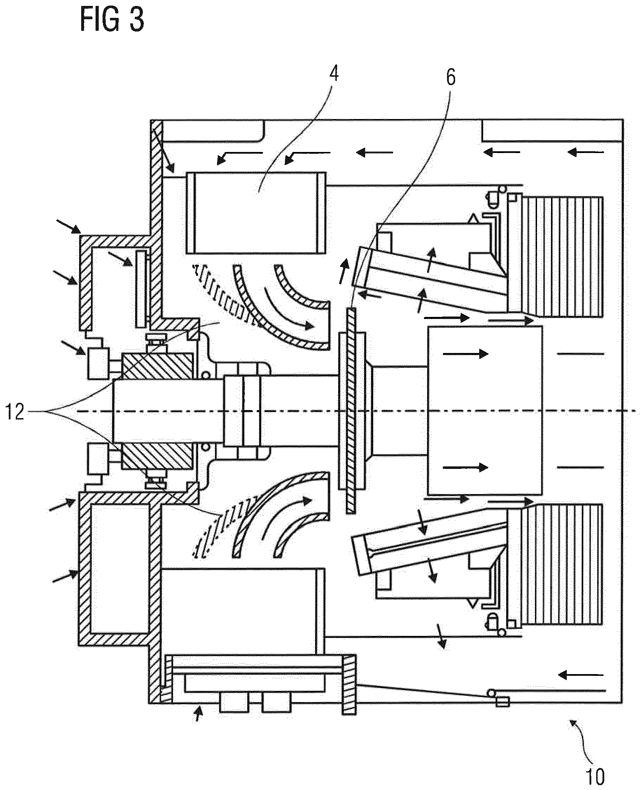

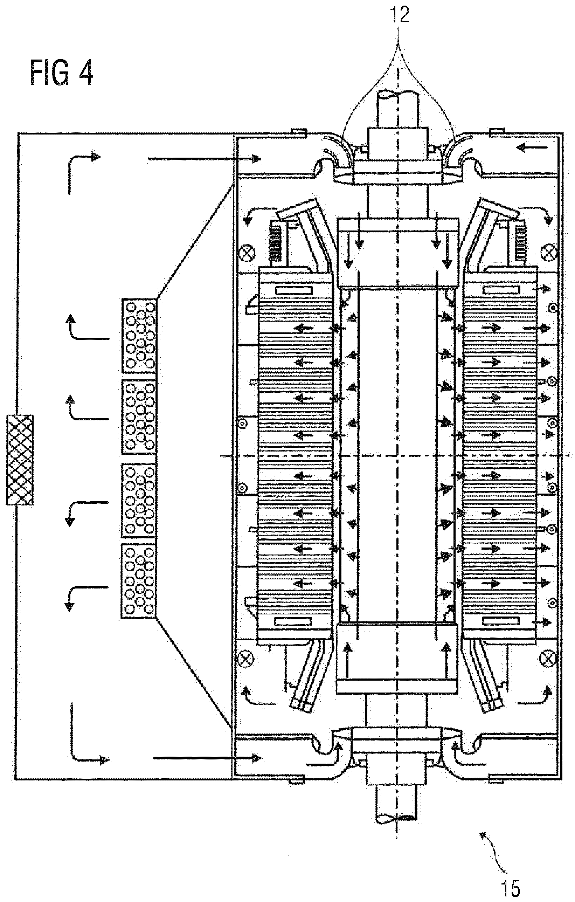

FIG 3 illustrates a detailed view of the placement of the silencing unit 12 within the turbomachinery. It can be seen in FIG 3, that the structure of the silencing unit 12 can be modified based in the space available between the air supply unit 4 and the blower 6. The details of construction and composition of the silencing unit 12 are explained in detail in the subsequent figures. FIG 4 illustrates an air cooled turbomachinery with silencing units, in accordance with an embodiment. The silencing units 12 can be used in an air cooled turbomachinery, as shown in FIG 4. Therefore, the silencing unit 12 can be used in air-cooled turbomachinery as well as hydrogen cooled turbomachinery.

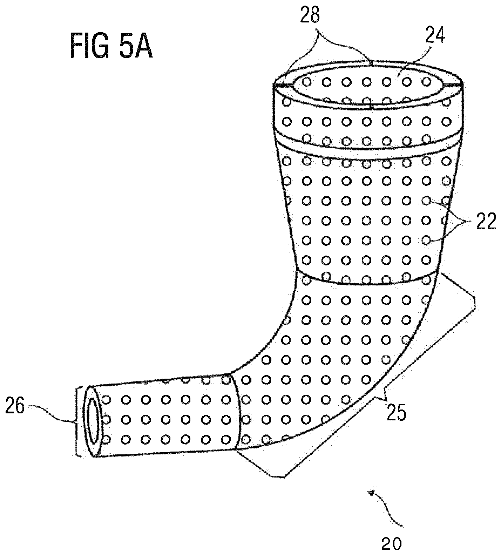

FIG 5A illustrates a front view of a silencing unit 20, in accordance with an embodiment. The silencing unit 20 is fabricated in a way so that it can be positioned between the air supply unit 4 and the blower 6, in order to attenuate the noise generated. As shown in FIG 5A, the silencing unit 20 has a first aperture 24 and a second aperture 26. The first aperture 24 is circular and bigger than the second aperture 26. The first aperture 24 is adapted to receive a large volume of air released from the air supply unit 4. The second aperture 26 is also circular but the diameter of the second aperture 26 may be smaller than the first aperture 24. The second aperture 26 is adapted to direct the volume of air to the blower 6. Further, the first aperture 24 and the second aperture 26 are connected via an air flow duct 25. The air flow duct 25 may be perforated with holes 22. The holes 22 allow for increased interaction between the volume of air entering the silencing unit and the acoustic absorbing material, thereby increasing the sound attenuation.

The first aperture 24 may receive a first volume of air from the air supply unit 4. The first volume of air may have a high noise density. When the first volume of air enters the first aperture 24, the first volume of air interacts with one or more layers of the acoustic absorbing material within the air flow duct 25. The acoustic absorbing layers attenuate the noise in the first volume of air. Further, a second volume of air is released from the second aperture 26. The first volume of air passes through the air flow duct 25 to be finally released from the second aperture 26. The air flow duct 25 may have one or more layers of acoustic absorbing material arranged in concentric layers from the centre of the air flow duct 25. Further, the silencing unit 20 includes a plurality of connectors 27. The connectors 27 are placed at various regions in the silencing unit 20 for reinforcing the structure of the silencing unit 20.

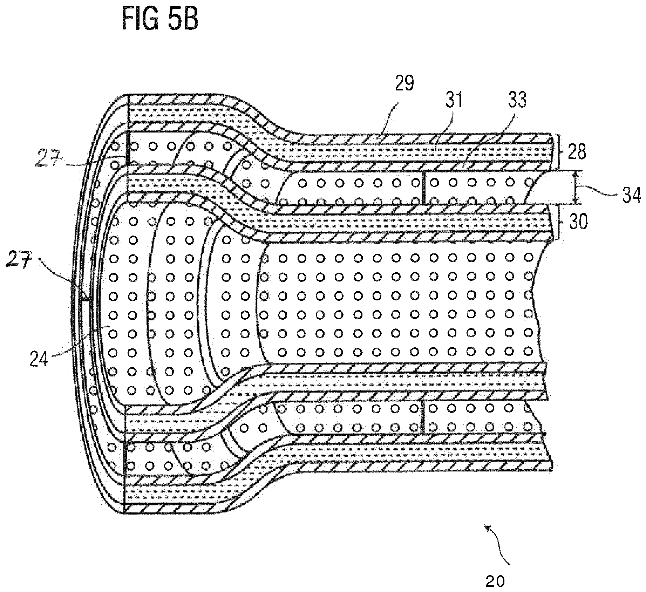

FIG 5B illustrates an exemplary cross-sectional view of a portion of the silencing unit 20. The cross sectional view includes a first aperture 32, a first layer 28, a second layer 30 and a clearance 34. The first aperture 32 is an opening which may face towards the air supply unit 4 in order to receive the volume of air into the silencing unit 20. The first layer 28 includes an outer layer 29, a layer of acoustic absorbing material 31 and an inner layer 33. The second layer 30 may also have the acoustic absorbing material 31 sandwiched between two layers. FIG 5B further illustrates the connectors 27, which are placed at various points within the air flow duct in order to keep the structure of the silencing unit 20 intact.

From FIG 5B we can observe that the outer layer 29 and the inner layer 33 are perforated. The perforations 35 allow for increased interaction of the volume of air with the acoustic absorbing material 31 so that maximum amount of noise components in the volume of air is attenuated. The outer layer 29 and the inner layer 33 may be fabricated using, for example, a metal and a non-metal. In an example, the outer layer 29 and the inner layer 33 may be composed of materials which have a high noise absorption coefficient. The acoustic absorbing material 31 is chosen to have a high acoustic absorption coefficient. The acoustic absorbing material 31 may include materials such as, but not limited to, glass wool, acoustic cotton and acoustic foam. The acoustic absorbing material 31 may be chosen considering the health and safety standards of the field workers.

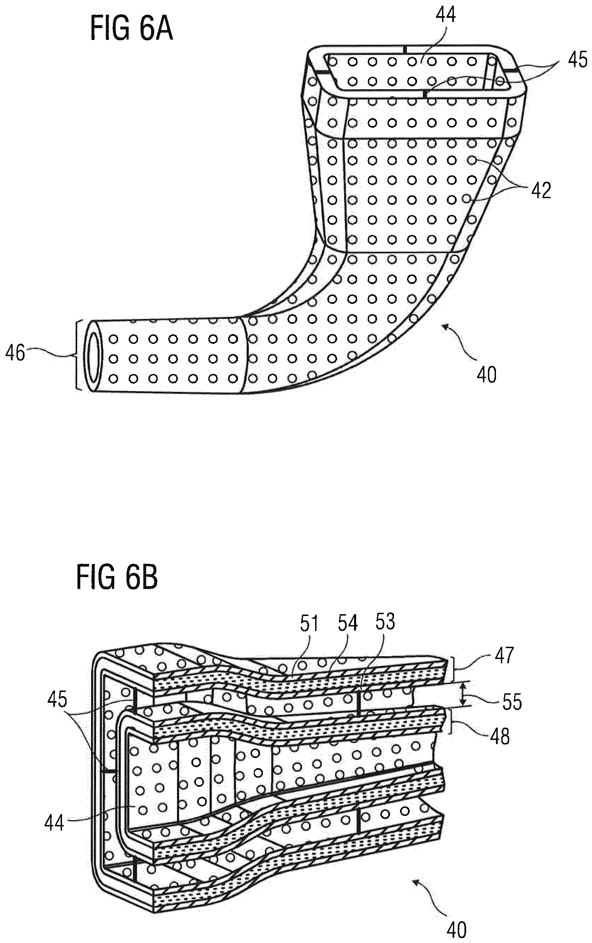

FIG 6A illustrates a front view of a variant of silencing unit, in accordance with an embodiment. In FIG 6A, the silencing unit 40 includes a first aperture 44 may be polygonal based on the requirement. In FIG 6A, the first aperture is a square. The second aperture 46 is circular. In other variants the second aperture may be a polygon. It is apparent for a person skilled in the art that the first and second apertures can be shaped appropriately based on, for example, the nature of the space between the air supplier 4 and the blower 6 and noise reduction requirements. As explained in FIG 5A and 5B, the silencing unit 40 also has a plurality of connectors 45 to reinforce the structure of the silencing unit 40.

FIG 6B illustrates a cross sectional view of the variant of the silencing unit, in accordance with an embodiment. In FIG 6B, we can see a first layer 47, a second layer 48 and a clearance 50. The first layer includes an outer layer 51, an inner layer 53 and a layer of acoustic absorbing material 54 in between the outer layer 51 and the inner layer 53. The composition and the materials used in the silencing unit 40 is similar to silencing unit 20 as explained in conjunction with FIGS 5A and 5B.

The silencing unit 20 provides efficient and cost effective means for reducing the noise generated in the gas turbomachinery. Further, use of silencing units in the turbomachinery reduces the noise levels in the vicinity of the turbines thereby improving the working condition of the field workers.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description.

## Claims

1. A gas turbomachinery (1) comprising:
an air supply unit (4), having a first end and a second end, wherein the second end is capable of releasing a volume of air to a blower (6);
the blower (6), having a first end and a second end, wherein the first end is capable of receiving the volume of air from the air supply unit (4); and
a silencing unit (12, 20; 40), comprising a first aperture (24; 44) and a second aperture (26; 46) connected via an air flow duct (25), the silencing unit (12, 20; 40) placed between the air supply unit (4) and the blower (6), the air flow duct (25) comprising two layers of acoustic absorbing material (31; 51);
wherein the first aperture (24; 44) of the silencing unit (12; 20; 40) is adapted to receive a volume of air released from the air supply unit (4) which is positioned in proximity of the silencing unit (12; 20; 40), and the second aperture (26; 46) of the silencing unit (12; 20; 40) is adapted to release the volume of air and to direct the volume of air to the blower (6) **characterized in that**:
the blower is positioned in proximity to the silencing unit (12; 20; 40),
wherein the first aperture (24; 44) of the silencing unit (12; 20; 40) is bigger than the second aperture (26; 46); and **in that** the two layers of acoustic absorbing material (31; 51) are arranged in two concentric layers (28, 30; 47, 48) from the centre of the air flow duct (25), wherein a clearance (34; 55) is arranged between the two concentric layers (28, 30; 47, 48).

2. The gas turbomachinery (1) in accordance with claim 1, wherein the silencing unit (12) comprises a plurality of connectors (27; 45) arranged between the two concentric layers (28, 30; 47, 48) to reinforce the structure of the silencing unit (40).

3. The gas turbomachinery (1) in accordance with any of claims 1 to 2, wherein the air supply unit (4) is a cooler unit associated with the gas turbomachinery (1).

4. The gas turbomachinery (1) in accordance with any of claims 1 to 3, wherein the acoustic absorbing material has a high acoustic absorption co-efficient (31) and is preferably selected from a group of glass wool, acoustic cotton and acoustic foam.

5. The gas turbomachinery (1) in accordance with any of claims 1 to 4, wherein the air flow duct (25) is at least one of a solid structure and a perforated structure.

## Patentansprüche

1. Gasturbomaschine (1), Folgendes umfassend:
eine Luftzufuhreinheit (4), die ein erstes Ende und ein zweites Ende aufweist, wobei das zweite Ende eine Luftmenge an ein Gebläse (6) abgeben kann;
das Gebläse (6), das ein erstes und ein zweites Ende aufweist, wobei das erste Ende die Luftmenge von der Luftzufuhreinheit (4) aufnehmen kann; und
eine Schalldämpfungseinheit (12, 20; 40), die eine erste Öffnung (24; 44) und eine zweite Öffnung (26; 46) umfasst, die über einen Luftströmungskanal (25) miteinander verbunden sind, wobei die Schalldämpfungseinheit (12, 20; 40) zwischen der Luftzufuhreinheit (4) und dem Gebläse (6) angeordnet ist, wobei der Luftströmungskanal (25) zwei Lagen eines schallabsorbierenden Materials (31; 51) umfasst;
wobei die erste Öffnung (24; 44) der Schalldämpfungseinheit (12; 20; 40) dazu angepasst ist, eine von der in der Nähe der Schalldämpfungseinheit (12; 20; 40) angeordneten Luftzufuhreinheit (4) angegebene Luftmenge aufzunehmen, und die zweite Öffnung (26; 46) der Schalldämpfungseinheit (12; 20; 40) dazu angepasst ist, die Luftmenge abzugeben und die Luftmenge zum Gebläse (6) zu leiten, **dadurch gekennzeichnet, dass**:
das Gebläse in der Nähe der Schalldämpfungseinheit (12; 20; 40) angeordnet ist, wobei die erste Öffnung (24; 44) der Schalldämpfungseinheit (12; 20; 40) größer als die zweite Öffnung (26; 46) ist; und
die zwei Lagen schallabsorbierenden Materials (31; 51) in zwei konzentrischen Lagen (28, 30; 47, 48) von der Mitte des Luftströmungskanals (25) angeordnet sind, wobei zwischen den beiden konzentrischen Lagen (28, 30; 47, 48) ein Spielraum (34; 55) besteht.

2. Gasturbomaschine (1) nach Anspruch 1, wobei die Schalldämpfungseinheit (12) mehrere Verbindungsteile (27; 45) umfasst, die zwischen den beiden konzentrischen Lagen (28, 30; 47, 48) angeordnet sind, um die Struktur der Schalldämpfungseinheit (40) zu verstärken.

3. Gasturbomaschine (1) nach einem der Ansprüche 1 bis 2, wobei die Luftzufuhreinheit (4) eine der Gasturbomaschine (1) zugeordnete Kühlereinheit ist.

4. Gasturbomaschine (1) nach einem der Ansprüche 1 bis 3, wobei das schallabsorbierende Material einen hohen Schallabsorptionskoeffizenten (31) aufweist und bevorzugt aus einer Gruppe bestehend aus Glaswolle, schallabsorbierender Baumwolle und Akustikschaum ausgewählt ist.

5. Gasturbomaschine (1) nach einem der Ansprüche 1 bis 4, wobei der Luftströmungskanal (25) eine feste Struktur und/oder eine perforierte Struktur aufweist.

## Revendications

1. Turbomachine à gaz (1), comprenant
une unité de fourniture d'air (4), présentant une première extrémité et une second extrémité, dans laquelle la seconde extrémité est capable de distribuer un volume d'air à une soufflante (6);
la soufflante (6), présentant une première extrémité et une second extrémité, dans laquelle la première extrémité est capable de recevoir le volume d'air en provenance de l'unité de fourniture d'air (4); et
une unité d'insonorisation (12, 20; 40), comportant une première ouverture (24; 44) et une seconde ouverture (26; 46) connectées par l'intermédiaire d'un conduit d'écoulement d'air (25), l'unité d'insonorisation (12, 20; 40) étant placée entre l'unité de fourniture d'air (4) et la soufflante (6), le conduit d'écoulement d'air (25) comprenant deux couches de matériau d'absorption acoustique (31; 51);
dans laquelle la première ouverture (24; 44) de l'unité d'insonorisation (12; 20; 40) est adaptée pour recevoir un volume d'air distribué par l'unité de fourniture d'air (4) qui est positionnée à proximité de l'unité d'insonorisation (12; 20; 40), et la seconde ouverture (26; 46) de l'unité d'insonorisation (12; 20; 40) est adaptée pour distribuer le volume d'air et pour diriger le volume d'air vers la soufflante (6),
**caractérisée en ce que** la soufflante est positionnée à proximité de l'unité d'insonorisation (12; 20; 40), dans lequel la première ouverture (24; 44) de l'unité d'insonorisation (12; 20; 40) est plus grande que la seconde ouverture (26; 46); et
**en ce que** les deux couches de matériau d'absorption acoustique (31; 51) sont agencées en deux couches concentriques (28, 30; 47, 48) à partir du centre du conduit d'écoulement d'air (25), dans lequel un dégagement (34; 55) est agencé entre les deux couches concentriques (28, 30; 47, 48).

2. Turbomachine à gaz selon la revendication 1, dans laquelle l'unité d'insonorisation (12) comprend une pluralité de connecteurs (27; 45) qui sont agencés entre les deux couches concentriques (28, 30; 47, 48) afin de renforcer la structure de l'unité d'insonorisation (40).

3. Turbomachine à gaz (1) selon l'une quelconque des revendications 1 à 2, dans laquelle l'unité de fourniture d'air (4) est une unité de refroidissement qui est associée à la turbomachine à gaz (1).

4. Turbomachine à gaz (1) selon l'une quelconque des revendications 1 à 3, dans laquelle le matériau d'absorption acoustique présente un coefficient d'absorption acoustique élevé (31) et est de préférence sélectionné dans un groupe comprenant la laine de verre, le coton acoustique et une mousse acoustique.

5. Turbomachine à gaz (1) selon l'une quelconque des revendications 1 à 4, dans laquelle le conduit d'écoulement d'air (25) est au moins soit une structure pleine, soit une structure perforée.
